# EUROPEAN PATENT SPECIFICATION

(11) **EP 2 345 575 B1**
(45) Date of publication and mention of the grant of the patent: **12.12.2012**
(21) Application number: 10425008.9
(22) Date of filing: 14.01.2010
(51) Int. Cl.: B62D 57/00

(54) **Inertial traction device**
Trägheitsantriebsvorrichtung
Dispositif de traction inertielle

(43) Date of publication of application: 20.07.2011
(73) Proprietor: Falesiedi, Osvaldo, 10080 San Benigno Canavese (IT)
(72) Inventor: Falesiedi, Osvaldo, 10080 San Benigno Canavese (IT)
(74) Representative: Borsano, Corrado

(56) References cited:
- DE-A1- 2 101 375
- DE-A1- 2 405 343
- DE-A1- 2 557 030
- US-A- 3 196 580

## Description

### Field of the invention

The present invention relates to an inertial traction device, suitable for any gravitational environment.

### Description of the prior art

According to the prior art there are two mobility systems and traction systems for ground vehicles or, anyway, for vehicles suitable to move in gravitational systems: wheel traction system (tyres, iron, etc.) and tracked traction system.

Although the tracked traction systems are the most suitable on particularly soft grounds, they are not suitable on delicate surfaces, above all when it is necessary to protect the ground, such as for example in archaeological excavations.

Moreover, both traction systems are not suitable when it is necessary to climb over an obstacle with considerable dimensions, above all when the obstacle should not be damaged.

An example of a device of the prior art is given in DE2405343, which describes the preamble of claim 1.

### Summary of the invention

The aim of the present invention is to provide an inerial traction device suitable to solve all the problems set forth above.

The subject of the present invention is an inertial traction device according to claim 1.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiment of an inertial traction method and device, shown with the help of the drawings that are attached hereto, which are merely illustrative and not limitative, in which:
Figure 1 shows an embodiment of the device that is subject of the present invention;
Figure 2 shows an alternative embodiment of the device in figure 1 with a modified part;
Figures 3a and 3b show the invention as a further alternative embodiment of the device according to figure 1; Figure 3c shows a further alternative embodiment of the device according to figure 2;
Figure 4 shows a coupling of two devices according to the previous figures;
Figure 5 shows a further unclaimed embodiment of the device according to the present invention suitable for moving in water.

In the drawings the same reference numbers and letters identify the same elements or components.

### Detailed description of a preferred embodiment of the invention

A traction device according to the present invention comprises at least a support element which has a different coefficient of friction when moving on a support surface S,W according to two opposite senses of a direction of movement, and which has impulsive inertial means 2. Therefore the coefficient of friction is anisotropic along two opposite senses of a direction of movement that is the same direction of movement as the traction device. According to a first alternative embodiment of the invention, said impulsive inertial means 2 comprise at least a pair of counter rotating synchronous masses having phase 0+k2 π with respect to a straight line passing through each respective center of rotation and parallel to said direction of movement V.

Since both of said counter rotating masses have phase 0 with respect to a straight line parallel to said direction of movement V, their contribution in terms of centrifugal forces is added up and makes a resultant vector which is null according to a direction parallel to the direction of movement V, while they create a variable oscillating force in said direction of movement. Then the resultant vector, when it is not null, always lies on said direction of movement with alternatively opposite senses.

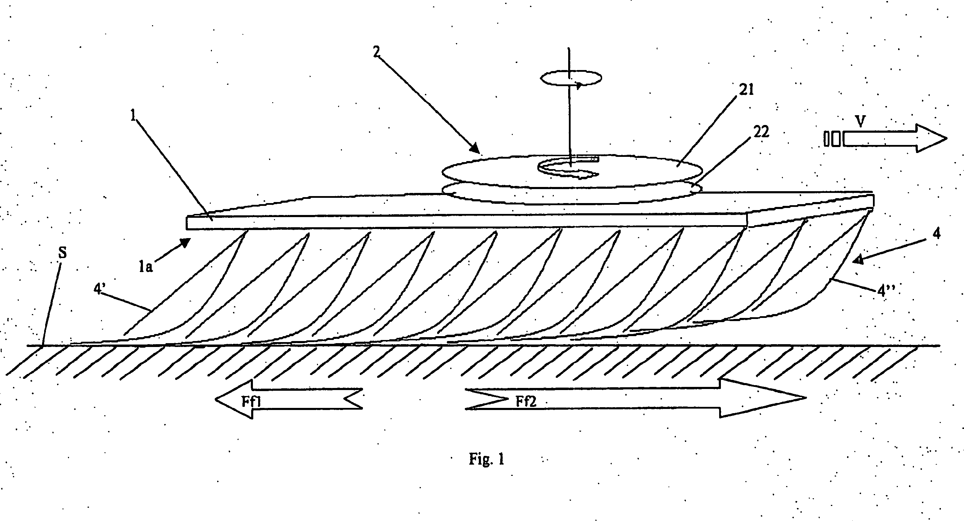

Said anisotropy of the coefficient of friction along said direction of movement determines that, according to a first sense of said resultant vector (forward movement sense V), said support element develops a low friction force Ff1 with said support surface S,W and the traction device slides forward, while, according to a second sense of said resultant vector, said support element develops a friction force Ff2 which can, at least partially, hinder its backward movement along said direction of movement. According to the alternative embodiment shown in figure 1, said counter rotating masses are realized by means of special disks 21 and 22 having eccentric barycenter and whose axes of rotation coincide. Said counter rotating masses may be further fractioned on more disks.

According to another alternative embodiment, said impulsive inertial means 2 comprise a mass alternatively oscillating according to the direction of movement V which, at the limit stop, hits a part integral with the support element 1 with the highest possible amount of motion, in the forward movement sense of the direction V.

According to another alternative embodiment not shown in the figures, said impacts are realized by means of an internal-combustion engine exploiting the mass of the oscillating parts of the engine.

Said anisotropy of said coefficient of friction is preferably realized by means of a plurality of long-limbed elements 4, projecting from the lower surface 1a of said support element, facing the support surface S and inclined, preferably all in the same way, with an appropriate angle contained in a plane perpendicular to said lower surface 1aof said support element. Preferably said plane, perpendicular to said lower surface 1a, is parallel to said direction of movement.

Said long-limbed elements 4 may be numerous and particularly flexible, in order to guarantee a lower stiffness of the support of the traction device with respect to the ground.

According to the alternative embodiment, shown in fig. 1, stiff elements 4' and flexible elements 4" are used at the same time, with the flexible elements being slightly longer than the stiff elements, so that the first determine a high coefficient of friction according to a sense of said direction of movement, while the latter cooperate with the first in order to bear the weight of the traction device and also of possible loads carried by it.

Said long-limbed elements of both types may comprise respectively, for example, stiff metal wires and more flexible wires made of metal or of another material. By limiting the number of stiff elements, the traction device is particularly suitable for being used on delicate and crumbly surfaces, such as, for example, in archaeological excavations, etc..

Moreover the end of each of said long-limbed elements, namely the part that will come into contact with said support surface S, may be branched, namely it may comprise a plurality of terminal parts suitable to open like the fingers of a web-footed bird when it comes into contact with the ground, in order to limit the pressure exerted on it, and then suitable to close in order to limit the friction during the forward sliding of the support element to which said long-limbed elements are connected.

Said long-limbed elements may be made, according to what is necessary, of metals such as steel of various types, or carbon fibres or synthetic fibres.

Moreover, long-limbed elements of different types may be associated in order to obtain a particular behaviour of the traction device, also according to its context of use.

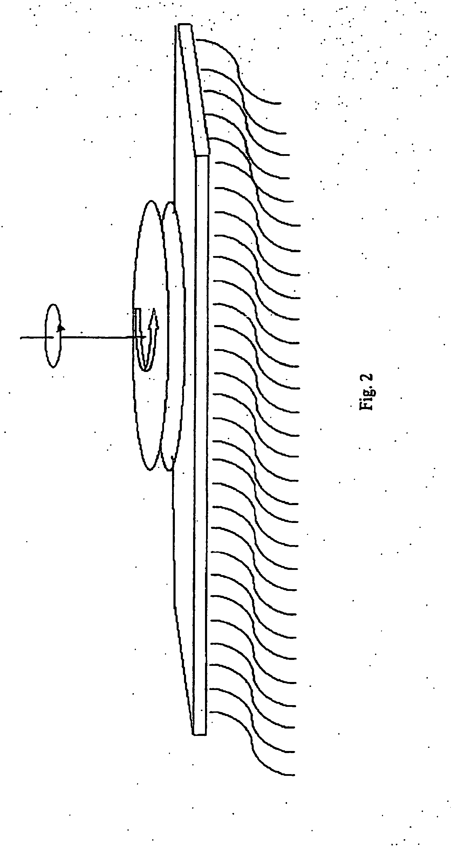

By giving appropriate folds to said long-limbed elements, as shown in figure 2, the elements themselves become particularly flexible, thus at predetermined impulse frequencies, the traction device does not slide along the support surface S, but it can leap, and therefore it can climb over obstacles, even with considerable dimensions. While at other frequencies, the traction device moves in a quite continuous way, to the extent that it is not possible to see the impulse forward movement of the device with the naked eye.

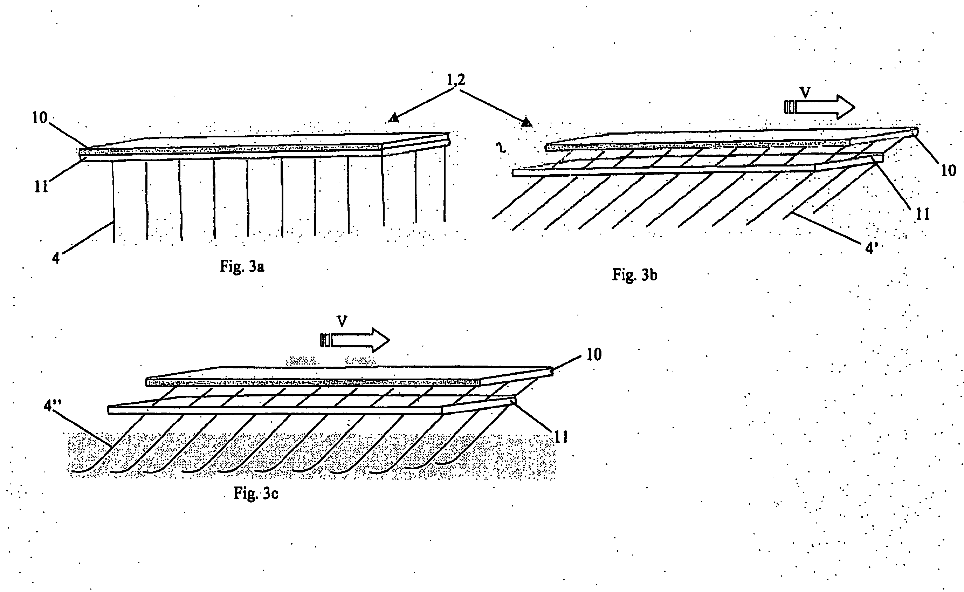

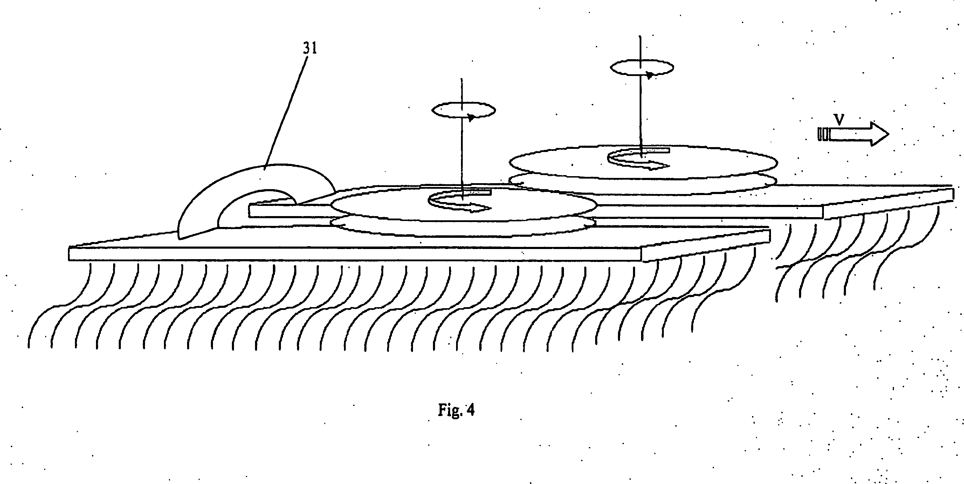

According to the invention, see figures 3a and 3b, said support element 1 comprises a first plate 10 from which long-limbed elements 4 project and a second plate 11 placed under said first plate comprising as many through holes as the number of long-limbed elements, so that said long-limbed elements can pass through said through holes. A translation of said second plate with respect to said first plate determines a variation of the angle of inclination of said long-limbed elements. Thus, it is possible to vary the coefficient of friction of each support element with respect to a support surface S, also inverting the anisotropy of the coefficient of friction of said support elements, the traction device may move both forward and backward and, when it includes two independent support elements, as shown in fig. 4, it may rotate around itself.

Figure 3c shows an alternative embodiment according to the figures 3a and 3b, wherein instead of stiff long-limbed element 4', flexible long-limbed elements are shown.

In order to allow the traction system to move along curve trajectories, at least two support elements, see figure 4, each of them comprising independent impulsive inertial means 2, are placed one next to the other and are made integral with each other by an interconnection bridge 31, so that the system turns when the impulsive inertial means of just one of said support elements are activated, otherwise the system moves along a straight line if both impulsive inertial means are activated.

According to a further alternative embodiment, which does not form part of the present claimed invention, said support element may have shapes different from those previously described, that may comprise, for example, portions of cylindrical surfaces, etc., moreover said anisotropy of the coefficient of friction of the lower surface 1a of the support element may be realized in other ways, for example by means of asymmetric prisms or nails, such as for example in certain grates, etc. These alternative (unclaimed) embodiments can be realized by the person skilled in the art.

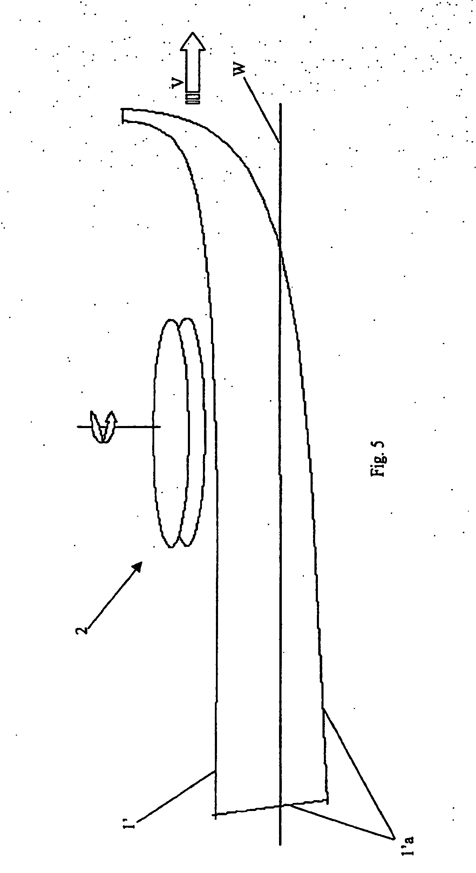

According to a further alternative but unclaimed embodiment shown in figure 5, the present invention may be suitable for moving when floating in liquids. In particular, the support element 1' comprise a lower hull-shaped surface 1'a, whose stem and whose stern have a different resistance to the forward movement on a water surface W, thus having a difference friction force according to the sense of the stress exerted to the support element by said impulsive inertial means 2. Also in this case two support elements may be coupled in order to obtain a sort of catamaran, each of the two support elements comprising independent impulsive inertial means 2. According to another alternative embodiment a rudder is used.

The elements and the characteristics described in the different preferred embodiments may be combined without departing from the scope of the present invention as defined by the appended claims. For example, a combination of the aforementioned characteristics may allow to realize amphibious traction devices.

## Claims

1. Traction device comprising a support element (1,1') comprising a lower surface (1a,1'a) having a different coefficient of friction according to two opposite senses of a direction of movement (V); impulsive inertial means (2) suitable to exert thrust impulses parallel to said direction of movement (V) on said support element (1,1'), wherein said support element (1) comprises a plurality of long and narrow long-limbed elements (4), projecting from the respective lower surface (1a, 1'a) and inclined according to an appropriate angle contained in a plane perpendicular to said lower surface (1a, 1'a) **characterized in that** said support element (1, 1') comprises a first plate (10) from which said long and narrow elements project (4) and a second plate (11) placed under said first plate comprising as many through holes as the long and narrow elements are; said long and narrow elements (4) passing through said through holes; said second plate suitable to translate with respect to said first plate in order to determine a variation of the angle of inclination of said long and narrow elements (4).

2. Device according to claim 1, wherein said long and narrow elements are made of metal (4') and/or of a synthetic material (4").

3. Device according to claim 2, wherein a first part (4') of said long-limbed elements is more stiff than a second part (4") of said long-limbed elements and wherein said second part (4") comprises longer long-limbed elements than the long-limbed elements comprised in said first part.

4. Device according to the previous claims, wherein said impulsive inertial means (2) comprise at least a pair of counter rotating synchronous masses (21, 22) having phase 0+K2π with respect to a straight line passing through each respective center of rotation and parallel to said direction of movement V.

5. Device according to claim 4, wherein said counter rotating synchronous masses (21, 22) are made of a pair of disks having eccentric barycenter and whose axes of rotation coincide.

6. Device according to claims from 1 to 3, wherein said impulsive inertial means (2) comprise :
- an alternatively oscillating mass which hits a part integral with the support element (1, 1') in the sense and direction of movement (V), and/or
- an internal-combustion engine.

7. Device according to the previous claims, wherein said impulsive inertial means (2) are suitable to exert thrusts on said support element (1) according to different frequencies.

8. Device according to the previous claims, comprising a further support element and respective and independent impulsive inertial means (2), said support elements being placed one next to the other and being integral with each other by means of an interconnection bridge (31).

## Patentansprüche

1. Antriebsvorrichtung, umfassend ein Trägerelement (1, 1'), das eine untere Fläche (1a, 1'a) mit einem unterschiedlichen Reibungskoeffizienten gemäß zweier entgegengesetzter Sinne einer Bewegungsrichtung (V) aufweist; Impulsträgheitsmittel (2), die geeignet sind, Schubimpulse parallel zu der Bewegungsrichtung (V) auf das Trägerelement (1, 1') auszuüben, wobei das Trägerelement (1) eine Vielzahl von langen und schmalen langschenkligen Elementen (4) umfasst, die von der jeweiligen unteren Fläche (1a, 1'a) vorstehen und gemäß einem geeigneten Winkel geneigt sind, der in einer Ebene senkrecht zu der unteren Fläche (1a, 1'a) enthalten ist, **dadurch gekennzeichnet, dass** das Trägerelement (1, 1') eine erste Platte (10), von der die langen und schmalen Elemente vorstehen (4) und eine zweite Platte (11) umfasst, die unter der ersten Platte platziert ist, die so viele Durchgangslöcher umfasst, wie die langen und schmalen Elemente vorhanden sind; wobei die langen und schmalen Elemente (4) durch die Durchgangslöcher verlaufen; wobei die zweite Platte geeignet ist, sich mit Bezug auf die erste Platte zu verschieben, um eine Veränderung des Neigungswinkels der langen und schmalen Elemente (4) festzulegen.

2. Vorrichtung nach Anspruch 1,
wobei die langen und schmalen Elemente aus Metall (4') und/oder aus einem synthetischen Material (4") hergestellt sind.

3. Vorrichtung nach Anspruch 2,
wobei ein erster Teil (4') der langschenkligen Elemente steifer ist als ein zweiter Teil (4") der langschenkligen Elemente, und wobei der zweite Teil (4") längere langschenklige Elemente als die in dem ersten Teil enthaltenen, langschenkligen Elemente umfasst.

4. Vorrichtung nach den vorhergehenden Ansprüchen,
wobei die Impulsträgheitsmittel (2) zumindest ein Paar gegenläufig rotierende synchrone Massen (21, 22) umfassen, die eine Phase 0+k2π mit Bezug auf eine gerade Linie aufweisen, die durch jedes entsprechende Drehzentrum und parallel zu der Bewegungsrichtung (V) verläuft.

5. Vorrichtung nach Anspruch 4,
wobei die gegenläufig rotierenden synchronen Massen (21, 22) aus einem Paar Scheiben hergestellt sind, die einen exzentrischen Schwerpunkt aufweisen und deren Drehachsen zusammenfallen.

6. Vorrichtung nach den Ansprüchen 1 bis 3,
wobei die Impulsträgheitsmittel (2) umfassen:
- eine abwechselnd oszillierende Masse, die einen mit dem Trägerelement (1, 1') einstückigen Teil im Sinn und in der Bewegungsrichtung (V) trifft, und/oder
- eine Brennkraftmaschine.

7. Vorrichtung nach den vorhergehenden Ansprüchen,
wobei die Impulsträgheitsmittel (2) geeignet sind, Drücke auf das Trägerelement (1) gemäß unterschiedlichen Frequenzen auszuüben.

8. Vorrichtung nach den vorhergehenden Ansprüchen,
die ein weiteres Trägerelement und entsprechende und unabhängige Impulsträgheitsmittel (2) umfasst, wobei die Trägerelemente nebeneinander platziert sind und mittels einer Verbindungsbrücke (31) einstückig miteinander sind.

## Revendications

1. Dispositif de traction comportant un élément de support (1, 1') comprenant une surface inférieure (1a, 1'a) ayant un coefficient de frottement différent selon deux sens opposés d'une direction de mouvement (V) ; des moyens inertiels impulsionnels (2) adaptés pour exercer des impulsions de poussée parallèles à ladite direction de mouvement (V) sur ledit élément de support (1, 1') ; dans lequel ledit élément de support (1) comprend une pluralité d'éléments à longs membres longs et étroits (4), en saillie depuis la surface inférieure (1a, 1'a) respective et inclinés selon un angle approprié contenu dans un plan perpendiculaire à ladite surface inférieure (1a, 1'a), **caractérisé en ce que** ledit élément de support (1, 1') comprend une première plaque (10) à partir de laquelle lesdits éléments longs et étroits sont en saillie (4) et une seconde plaque (11) placée sous ladite première plaque comprenant un nombre de trous traversants égal au nombre d'éléments longs et étroits ; lesdits éléments longs et étroits (4) passant à travers lesdits trous traversants ; ladite seconde plaque étant adaptée pour se déplacer par rapport à ladite première plaque afin de déterminer une variation de l'angle d'inclinaison desdits éléments longs et étroits (4).

2. Dispositif selon la revendication 1, dans lequel lesdits éléments longs et étroits sont constitués de métal (4') et/ou d'un matériau synthétique (4").

3. Dispositif selon la revendication 2, dans lequel une première partie (4') desdits éléments à longs membres est plus rigide qu'une seconde partie (4") desdits éléments à longs membres et dans lequel ladite seconde partie (4") comprend des éléments à longs membres plus longs que les éléments à longs membres compris dans ladite première partie.

4. Dispositif selon les revendications précédentes, dans lequel lesdits moyens inertiels impulsionnels (2) comprennent au moins une paire de masses synchrones contrarotatives (21, 22) ayant une phase 0+k2π par rapport à une droite passant à travers chaque centre de rotation respectif et parallèle à ladite direction de mouvement V.

5. Dispositif selon la revendication 4, dans lequel lesdites masses synchrones contrarotatives (21, 22) sont constituées d'une paire de disques ayant un barycentre excentrique et dont les axes de rotation coïncident.

6. Dispositif selon les revendications 1 à 3, dans lequel lesdits moyens inertiels impulsionnels (2) comprennent :
- une masse oscillant alternativement qui frappe une partie solidaire avec l'élément de support (1, 1') dans le sens et la direction de mouvement (V), et/ou
- un moteur à combustion interne.

7. Dispositif selon les revendications précédentes, dans lequel lesdits moyens inertiels impulsionnels (2) sont adaptés pour exercer des poussées sur ledit élément de support (1) selon différentes fréquences.

8. Dispositif selon les revendications précédentes, comprenant un élément de support supplémentaire et des moyens inertiels impulsionnels (2) indépendants et respectifs, lesdits éléments de support étant placés les uns à côté des autres et étant solidaires les uns avec les autres au moyen d'un pont d'interconnexion (31).
